(19) **Europäisches Patentamt**
**European Patent Office**
**Office européen des brevets**

(11) **EP 1 529 587 B1**

(12) **EUROPÄISCHE PATENTSCHRIFT**

(45) Veröffentlichungstag und Bekanntmachung des Hinweises auf die Patenterteilung:
**28.11.2007 Patentblatt 2007/48**

(51) Int Cl.:
**B23D 77/00** *(2006.01)*

(21) Anmeldenummer: **03405791.9**

(22) Anmeldetag: **06.11.2003**

(54) **Maschinenreibwerkzeug, Wechselkopf und Schaft**

Machine reamer, toolhead and shaft

Alésoir de machine, tête d'outil et queue

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**11.05.2005 Patentblatt 2005/19**

(73) Patentinhaber: **Urma AG**
**5102 Rupperswil (CH)**

(72) Erfinder:
• **Zumsteg, Gilbert**
**5727 Oberkulm (CH)**
• **Berner, Urs**
**5000 Aarau (CH)**

(74) Vertreter: **Müller, Markus Andreas et al**
**Frei Patentanwaltsbüro**
**Postfach 1771**
**8032 Zürich (CH)**

(56) Entgegenhaltungen:
**US-A- 2 164 571 US-A- 2 164 573**
**US-A- 2 303 487 US-A- 3 087 360**
**US-A- 4 166 711 US-A- 5 163 790**

• **PATENT ABSTRACTS OF JAPAN vol. 1995, no. 05, 30. Juni 1995 (1995-06-30) & JP 07 040141 A (RIIDE GIKEN KK), 10. Februar 1995 (1995-02-10)**

**Beschreibung**

Die Erfindung bezieht sich auf ein Maschinenreibwerkzeug, einen Wechselkopf und einen Schaft für ein Maschinenreibwerkzeug gemäss dem Oberbegriff der Patentansprüche 1, 5 und 10.

**STAND DER TECHNIK**

Maschinenreibwerkzeuge oder Maschinenreibahlen werden zur Feinbearbeitung von zylindrischen Bohrungen verwendet. Einzelne Schneiden weisen jeweils eine Hauptschneide oder Anschnittpartie und eine Nebenschneide oder Führungspartie auf. Die Anschnittpartie leistet die Spanungsarbeit, die Führungspartie dient der Führung des Werkzeugs in der Bohrung. Um in allen Bearbeitungsumständen eine sichere Führung zu gewährleisten, beispielsweise bei einem schrägen Austritt der Bohrung, ist die Führungspartie in axialer Richtung um ein Vielfaches länger als die Anschnittpartie. Die Länge der Führungspartie beträgt somit beispielsweise 10 Millimeter oder mehr, bei einem Durchmesser von beispielsweise ca. 15 Millimetern.

Aus der WO 01/64381 A2 ist eine Maschinenreibahle bekannt, die einen Grundkörper und einen Wechselkopf, das heisst einen auswechselbaren Reibkopf, aufweist. Der Reibkopf ist einstückig ausgebildet und weist einen über eine rückwärtige Planfläche in axialer Richtung überstehenden Ansatz zur Wechseladaption auf. Dieser überstehende Ansatz ist entweder pyramidenartig oder als Konus ausgebildet. Bei der Verbindung mit dem Grundkörper wird der Ansatz in eine korrespondierende Vertiefung des Grundkörpers eingesetzt, wobei Spannlaschen, die durch Trennspalte oder durch Dehnschlitze voneinander oder vom übrigen Schaft abgetrennt sind, aufgeweitet werden. Zur Verbesserung der Drehmomentübertragung ist bei konischen Verbindungen zusätzlich ein Aussensechskant am Reibkopf und ein korrespondierender Innensechskant am Grundkörper ausgebildet.

US 1,472,798 zeigt einen Reibkopf, bei dem ein Kragen mit der Anschnittpartie und einem Teil der Führungspartie auswechselbar ist, währenddem der Rest der Führungspartie weiter eingesetzt wird.

US 2,164,573 beschreibt ein Schneidwerkzeug welches zum Reiben geeignet sein soll und eine dünne Wechselschneideplatte aufweist, die auf einen Schaft aufgeschraubt ist. Die Wechselschneideplatte wird entweder durch Stanzen aus einem Blech hergestellt, oder durch Walzen oder Schneiden eines Barrens, und anschliessendem Absägen einzelner Wechselschneideplatten vom Barren.

CH 433 916 zeigt einen Wechselschneidekopf, der auf einen zylindrischen Schaftfortsatz gelötet, geklebt, geschrumpft oder gepresst ist. Der Schaftfortsatz soll auch konisch sein können, was aber nur in Verbindung mit einer gelöteten oder eventuell auch einer geklebteh Verbindung Sinn machen könnte.

JP 07 040141, die den Oberbegriff der Ansprüche 1, 5 und 10 offenbart, (Patent Abstracts of Japan Bd. 1995, Nr. 05, 30. Juni 1995) beschreibt die Befestigung eines Wechselschneidekopfes auf einem Schaft, bei welcher eine konische Schraube in einen geschlitzten Fortsatz des Schaftes eingeschraubt wird.

Dadurch wird der Fortsatz des Schaftes aufgeweitet und von innen her gegen den Wechselschneidekopf gedrückt. Durch diesen Druck wird der Wechselschneidekopf gehalten. Im Schaft ist ein Stift, parallel und versetzt zur Achse des Schaftes angebracht, welcher mit einer Bohrung am Wechselschneidekopf korrespondiert und so eine eindeutige Orientierung des Wechselschneidekopfes garantiert.

DE 196 00 239 C1 zeigt eine Verbindung zwischen einem Fräskopf für die Holz und holzähnlichen Werkstoffen und einem korrespondierend gestalteten Schaft. Der Fräskopf weist einen hervorstehenden Verbindungsansatz mit einem Hohlkegel auf. Der Hohlkegel wird auf einen Kegelstumpf des Schaftes gedrückt, wobei der Kegelstumpf geringfügig zusammengedrückt wird.

JP 2002 059314 A offenbart einen Wechselkopf für ein Maschinenreibwerkzeug, welcher Wechselkopf einstückig ausgebildet ist und in einer planen schaftseitigen Stirnfläche eine als Verbindungselement ausgebildete Aussparung zur zentrierenden Befestigung des Wechselkopfs auf einem Schaft aufweist, wobei am Wechselkopf die als Verbindungselement ausgebildete Aussparung einen achsenzentralen Innenkonus zur Zentrierung des Wechselkopfes auf dem Schaft bildet, und der Wechselkopf keinen axial vorstehenden Ansatz zur Wechseladaption aufweist. Ebenfalls offenbart ist ein Schaft für ein Maschinenreibwerkzeug, aufweisend einen im wesentlichen rotationssymmetrischen Schaft mit einer stirnseitigen Planfläche, wobei der Schaft einen aus dieser Planfläche hervortretenden Verbindungsansatz zur Montage eines aufsetzbaren Wechselkopfs aufweist, wobei der Verbindungsansatz ein Aussenkonus ist.

**DARSTELLUNG DER ERFINDUNG**

Es ist Aufgabe der Erfindung, ein Maschinenreibwerkzeug, einen Wechselkopf und einen Schaft für ein Maschinenreibwerkzeug der eingangs genannten Art zu schaffen, welche eine Materialersparnis und damit eine kostengünstige Herstellung von Reibköpfen erlaubt. Eine weitere Aufgabe der Erfindung ist es, eine vereinfachte Konstruktion der genannten Teile eines Maschinenreibwerkzeuges zu ermöglichen.

Diese Aufgaben werden gelöst durch die Gegenstände der entsprechenden unabhängigen Patentansprüche.

Das Maschinenreibwerkzeug gemäss der Erfindung weist einen Reibkopf respektive Wechselkopf und einen Schaft gemäss der Erfindung auf. Der erfindungsgemässe Wechselkopf ist dabei einstückig und auswechselbar, wobei er in axialer Richtung an jeder Stelle, also einschliesslich eines Mittels zur Wechseladaption, eine Dicke von weniger als $h_{max}$ Millimetern aufweist, wobei sich diese Dicke $h_{max}$ aus einem Durchmesser D1 des Wechselkopfs in Millimetern berechnet zu

$$h_{max} = 6\,\mathrm{mm} + \frac{1}{10}(D_1 - 12\,\mathrm{mm}).$$

In einer bevorzugten Ausführungsform der Erfindung beträgt $h_{max}$ (für D1 kleiner als 12 mm) mindestens 6 mm und (für D1 grösser als 35 mm) höchstens 8 mm. In einer bevorzugten Ausführungsform ist $h_{max}$ unabhängig vom Durchmesser D1 gleich 6 mm.

Dementsprechend ist auch eine Führungspartie an einzelnen Schneiden der Wechselkopf etwas kürzer als $h_{max}$. Dieser Ausgestaltung des Wechselkopfs liegt die Erkenntnis zugrunde, dass eine übliche, vergleichsweise lange Führungspartie der Schneide in sehr vielen Anwendungsfällen gar nicht erforderlich ist. Dadurch kann der Wechselkopf, auch mit kleineren Dicken, beispielsweise unter 5 mm, 4.5 mm, 4 mm, 3.5 mm, 3mm, 2.5mm oder 2mm materialsparend gefertigt werden.

Gemäß der Erfindung weist der Wechselkopf in einer planen schaftseitigen Stirnfläche als Verbindungselement eine Aussparung zur zentrierenden Befestigung auf dem Schaft auf. Der Schaft ist vorzugsweise einstükkig und weist an einer stirnseitigen Planfläche einen in axialer Richtung aus dieser Planfläche hervortretenden Verbindungsansatz auf, welcher mit der Aussparung des Wechselkopfs korrespondiert. Der Wechselkopf weist also keinen axial vorstehenden Ansatz zur Wechseladaption auf. Dadurch wird der Materialbedarf am Wechselkopf weiter verringert und die Fertigung des Wechselkopfes vereinfacht.

Bei der herkömmlichen Verbindungsart, weitet der vorstehende Ansatz des harten Wechselkopfes den vergleichsweise weichen Schaft des Grundkörpers auf, wobei diese Aufweitung durch Trennspalte begünstigt wird. Im Gegensatz dazu drücken gemäss der Erfindung eine Innenfläche oder mehrere Punkte der Aussparung des harten Wechselkopfes den hervorstehenden Ansatz des Schaftes zusammen. Diese Kompression des Schaftmaterials erfolgt bei einer achszentrierten Anordnung der Verbindungselemente im wesentlichen in radialer Richtung. Die Kompression erfordert, bezogen auf die Materialverschiebung, vergleichsweise höhere Kräfte als das Aufweiten des Schaftmaterials gemäss dem Stand der Technik. Entsprechend werden gemäss der Erfindung gegebenenfalls höhere Fertigungsgenauigkeiten erforderlich. Vorteilhafterweise wird, im Gegensatz zur Aufweitung, die Ebenheit der stirnseitigen Fläche des Schafts nicht negativ beeinflusst.

In anderen Worten weist also der Wechselkopf zwei parallele, plane Stirnflächen mit einem axialen Abstand von weniger als ca. 6, vorzugsweise weniger als 5 oder weniger als oder gleich 4 Millimetern auf, und ohne eine über diese Stirnflächen herausragende Wechseladaption. Eine plane schaftseitige Stirnfläche weist eine in die Stirnfläche hineinragende Ausnehmung oder Vertiefung auf, in die ein korrespondierender, vorspringender Teil des Schafts einsetzbar ist. Bei diesem Einsetzen wird dieser Vorsprung entlang seines gesamten Umfangs oder zumindest an drei Stellen durch den Wechselkopf zusammengedrückt oder komprimiert oder nach innen verformt.

In anderen Ausführungsformen der Erfindung ist auch mehr als eine zentrierende Ausnehmung im Wechselkopf und korrespondierend mehr als ein Ansatz am Schaft möglich.

Gemäß der Erfindung ist die Aussparung in der Stirnfläche des Wechselkopfs ein Innenkonus und dem entsprechend der vorstehende Ansatz am Schaft ein korrespondierender Aussenkonus. Die Dimensionen von Innen- und Aussenkonus sind vorzugsweise derart aufeinander abgestimmt, dass beim Aufsetzen des Wechselkopfes auf den Schaft die stirnseitige Planfläche des Schafts und die gegenüberliegende Stirnseite des Wechselkopfes einen vorgegebenen Abstand aufweisen. Zur Befestigung des Wechselkopfes wird mindestens eine Kopfschraube durch mindestens eine Bohrung im Wechselkopf geführt und im Schaft verschraubt. Beim Anziehen der Kopfschraube respektive Kopfschrauben wird der Aussenkonus des Schaftes durch den Innenkonus des harten Wechselkopfes zusammengepresst, bis die stirnseitige Planfläche des Schafts und die gegenüberliegende Stirnseite des Wechselkopfes aufeinander treffen. Durch das Aneinanderpressen dieser beiden Stirnflächen entsteht eine reibschlüssige Verbindung. Es zeigt sich, dass auch bei Verwendung einer einzigen, achszentrierten Kopfschraube, diese Verbindung zur Drehmomentübertragung im Normalbetrieb ausreicht. Es kann also eine reine Konusverbindung verwendet werden, ohne polygonartige Kraftübertragungsmittel wie beispielsweise Dreikant- oder Sechskantverbindungen. Dadurch wird die Herstellung des Wechselkopfs wie auch des Schaftes vereinfacht.

Vorzugsweise weist der Aussenkonus oder der Innenkonus mehrere, vorzugsweise drei leicht vorstehende respektive freigestellte Segmente auf. Diese bilden beim zusammengesetzten Reibwerkzeug Kontaktflächen zwischen Schaft und Wechselkopf und damit beispielsweise eine Dreipunktauflage. Bei der Herstellung müssen nur diese Segmente und nicht der ganze Konusumfang mit hoher Genauigkeit gefertigt, beispielsweise geschliffen werden.

Die zentrierende Aussparung im Wechselkopf ist bei allen Ausführungsformen nicht zwingend mittig und durchgehend. Bei der Verwendung genau einer Kopfschraube jedoch ist die Aussparung sowohl mittig respektive achszentral im Wechselkopf angeordnet und auch durchgehend. Vorzugsweise bildet die Aussparung dann an der Stirnfläche des Wechselkopfs, die dem Schaft abgewandt ist, eine Aussparung für den Schraubenkopf. Dadurch ist der Schraubenkopf im Wechselkopf versenkbar. Dadurch wiederum ist die Bearbeitungstiefe in einem Sackloch maximierbar.

In einer weiteren bevorzugten Ausführungsform der Erfindung weisen der Schaft und der Wechselkopf korrespondierende Mittel zur eindeutigen Orientierung des Wechselkopfes bezüglich des Schaftes in Umfangsrichtung auf. Das Orientierungsmittel am Wechselkopf ist beispielsweise eine Vertiefung respektive ein Loch in der dem Schaft zugewandten Stirnfläche, und das korrespondierende Orientierungsmittel am Schaft ist ein Vorsprung oder ein Stift. Diese Orientierungsmittel stellen sicher, dass hohe Anforderungen an die Rundlaufeigenschaften der Reibahle auch beim Auswechseln des Wechselkopfes eingehalten werden: Die Reibköpfe werden bei der Herstellung auf derselben Werkzeugmaschine geschliffen, wobei die Orientierung der Reibköpfe bezüglich des Orientierungsmittels jeweils dieselbe ist. Eine Maschine, welche die Reibköpfe einsetzt, muss beim Einrichten mit einer neuen Reibahle mit einer Präzision im Mikrometerbereich rundgerichtet werden. Wird nun der Wechselkopf der Reibahle ausgetauscht, so ist dank der Orientierungsmittel kein erneutes Rundrichten erforderlich. Die Orientierungsmittel tragen durch ihren Formschluss auch zur Kraftübertragung auf den Wechselkopf bei.

Der Wechselkopf weist entlang seiner Umfangsrichtung mehrere voneneinander beabstandete Schneiden oder Schneidzähne auf. Jede Schneide weist eine Anschnittpartie und eine Führungspartie auf. Eine Anschnittpartie weist vorzugsweise in axialer Richtung eine Länge von 0.03 mm bis 1.2 mm, insbesondere von ca. 0.3 bis 0.7 mm auf. Die bis zur Dicke des Wechselkopfs verbleibende Länge der Schneide bildet die Führungspartie. Für eine mittlere Länge der Anschnittpartie von 0.5 mm und bildet die Führungspartie. Für eine mittlere Länge der Anschnittpartie von 0.5 mm und eine Wechselkopfdicke von 4 mm ergibt sich ein Verhältnis zwischen der Länge der Anschnittpartie und der Länge der Führungspartie von 1:7. Vorzugsweise beträgt dieses Verhältnis zwischen 1:6 und 1:10, was vergleichsweise grosse Werte gegenüber den maximal üblichen Werten von beispielsweise 1:20 sind. Die grossen Werte resultieren aus der geringen Dicke des Wechselkopfs. Diese wiederum wird unter anderem dank der Erkenntnis möglich, dass der grössere Teil aller Anwendungen keine besonders hohen Anforderungen an die Führung der Reibahle stellt.

Weitere bevorzugte Ausführungsformen gehen aus den abhängigen Patentansprüchen hervor.

## KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen schematisch:

| | |
|---|---|
| Figur 1 | einen Längsschnitt durch einen Kopfbereich eines Maschinenreibwerkzeugs gemäss der Erfindung; |
| Figur 2 | einen Längsschnitt durch einen Kopfbereich eines Schafts eines Maschinenreibwerkzeugs gemäss der Erfindung; |
| Figur 3 | einen Schaft gemäss der Erfindung; |
| Figuren 4,5 und 6 | jeweils korrespondierende Ansichten von Wechselköpfen gemäss verschiedenen Ausführungsformen der Erfindung. |

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## WEGE ZUR AUSFÜHRUNG DER ERFINDUNG

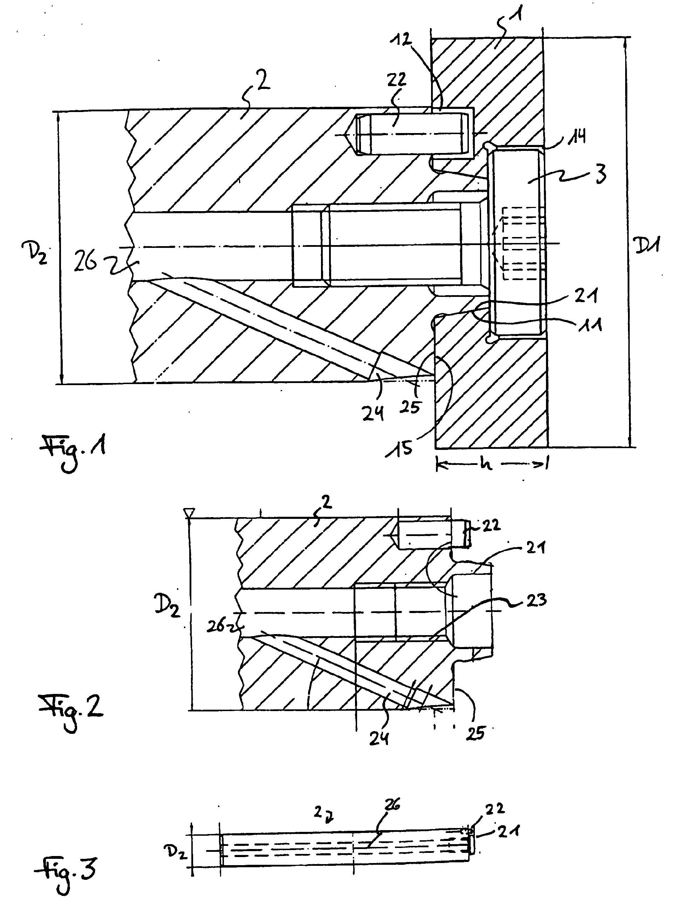

Figur 1 zeigt einen Längsschnitt durch einen Kopfbereich eines Maschinenreibwerkzeugs gemäss der Erfindung. Ein Wechselkopf 1 ist durch eine zentrisch in Achsrichtung verlaufende Kopfschraube 3 auf einen Schaft 2 geschraubt. Die Kopfschraube 3 ist einer Aussparung für den Schraubenkopf 14 der Kopfschraube 3 versenkt. Zur Orientierung des Wechselkopfs 1 in Umfangsrichtung weist der Wechselkopf 1 ein Orientierungsloch 12 und der Schaft 2 einen Orientierungsstift 22 auf, der in das Orientierungsloch 12 hineinragt. Der Schaft 2 weist eine Axialbohrung 26 auf, von welcher am werkzeugseitigen Ende Kühlmittelkanäle 24 zur Aussenseite des Schafts 2 in der Nähe des Wechselkopfs 1 führen. Durch die Nähe des Kühlmittelaustritts zum Wechselkopf 1 und die geringe Dicke h des Wechselkopfs ist eine verbesserte Kühlung der schneidenden Teile gewährleistet. Eine schaftseitige Planfläche 15 des Wechselkopfs 1 wird durch die Verschraubung an eine stirnseitige Planfläche 25 des Schafts 2 gepresst. Dabei werden auch Verbindungselemente, in der vorliegenden Ausführungsform der Erfindung ein Innenkonus 11 des Wechselkopfs 1 und ein Aussenkonus 21 des Schafts 2, aneinandergepresst. Da das Material des Wechselkopfs 1 eine niedrigere Verformbarkeit als jenes des Schafts 2 aufweist, wird dabei der Aussenkonus 21 in radialer Richtung innerhalb seiner Materialelastizität nach innen verformt und komprimiert respective verdichtet.

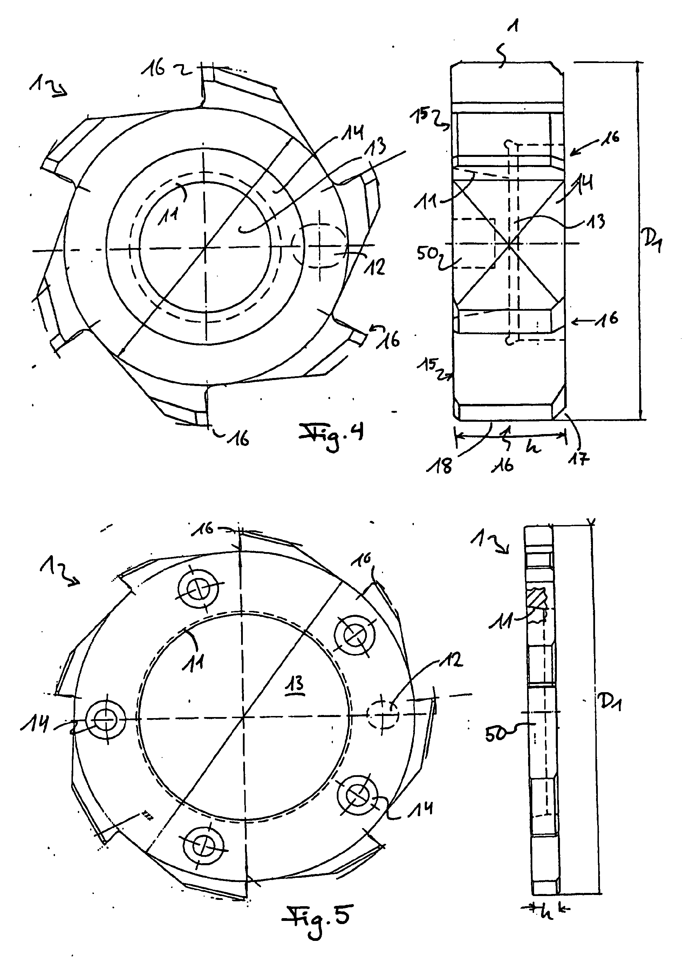

Der Wechselkopf 1 weist einen Durchmesser D1 zwischen beispielsweise 10 mm und 60 mm auf, wobei für höhere Werte eine Ausführungsform mit einer Befestigung des Wechselkopfs 1 gemäss Figur 5 bevorzugt ist. Der Schaft 2 weist einen Durchmesser D2 auf, der zumindest um einige Millimeter kleiner ist als jener des Wechselkopfs 1.

Eine Dicke h des Wechselkopfs 1 in axialer Richtung, also in Richtung der Drehachse des Werkzeugs, beträgt vorzugsweise weniger als 6 mm oder 5 mm, im vorliegenden Beispiel 4 mm, bei einem Durchmesser D1 zwischen 10 mm und 60 mm oder mehr. Der Innenkonus 11 ragt beispielsweise bis zu einer Tiefe von 2 mm in den Wechselkopf 1 hinein. Dementsprechend ragt der Aussenkonus 21 ca. 2 mm über die stirnseitige Planfläche 25 des Schaft 2 hinaus. Die Masse von Innenkonus 11 und Aussenkonus 21 sind aufeinander abgestimmt, so dass beim losen Zusammensetzen ein vordefinierter kleiner Luftspalt zwischen der schaftseitigen Planfläche 15 des Wechselkopfs 1 und der stirnseitigen Planfläche 25 des Schafts 2 entsteht. Beim Anziehen der Kopfschraube 3 werden diese Flächen zusammengepresst, und wegen der vorgegebenen Grösse des Luftspalts tritt eine kontrollierte, vorbestimmte Verformung des Aussenkonus 21 auf.

Figur 2 zeigt einen Längsschnitt durch einen Kopfbereich eines Schafts eines Maschinenreibwerkzeuges gemäss der Erfindung. Der Schaft oder zumindest der Kopfbereich ist vorzugsweise einstückig ausgeführt. Die Axialbohrung 26 ist durchgehend ausgestaltet und weist am werkzeugseitigen Ende ein Gewinde 23 auf. Im Bereich des Innenkonus 11 weist die Axialbohrung 26 einen gegenüber der Gewindebohrung 23 vergrösserten Durchmesser auf. Dadurch verbleibt zwischen dem Material des Innenkonus 11 und der Kopfschraube 3 ein freier Bereich zur Verformung des Innenkonus 11. Der Orientierungsstift 22 ist in eine Bohrung im Schaft 2 eingepresst. Im Prinzip können auch der Orientierungsstift an der Wechselschneidplatte 1 und das korrespondierende Orientierungsloch am Schaft 2 angeordnet sein. Jedoch ist diese Ausführungsform in der Herstellung leicht aufwendiger, insbesondere da Wechselköpfe 1 häufiger als Schäfte 2 ausgewechselt werden.

Figur 3 zeigt einen Schaft 2 gemäss der Erfindung. Der Schaft 2 ist maschinenseitig, also an seinem dem Werkzeug 1 fernen Ende zur Einspannung in eine Maschine vorgesehen. Er ist dazu beispielsweise von kreiszylindrischer Form oder weist Norm-Spannflächen auf. Beispielhafte Masse sind eine Schaftlänge von 80 mm und ein Schaftdurchmesser D2 von 10 mm bei Reibkopfdurchmessern von 11 mm bis 16 mm oder eine Schaftlänge von 110 mm und ein Schaftdurchmesser D2 von 16 mm bei Reibkopfdurchmessern von 18 mm bis 24 mm. Es ist am Schaft selber vorzugsweise keine Führungspartie zur Führung des Schafts im Bohrloch ausgebildet.

Figuren 4, 5 und 6 zeigen jeweils korrespondierende Ansichten von Wechselköpfen gemäss verschiedenen Ausführungsformen der Erfindung. Figur 4 zeigt eine Ausführungsform mit einer zentralen Kopfschraube 3 entsprechend den Figuren 1 bis 3. Eine durchgehende Ausnehmung 50,13,14 ist schaftseitig als Aussparung 50 respektive Innenkonus 11 ausgebildet, an der gegenüberliegenden Seite als Aussparung für den Schraubenkopf 14, und dazwischen als Bohrung 13.

Der Wechselkopf 1 weist mehrere in Umfangsrichtung verteilte Schneidezähne mit Schneiden 16 auf. Eine Schneide führt in axialer Richtung von einer ersten zu einer zweiten planen Stirnfläche des Wechselkopfs 1. Die Stirnflächen begrenzen den Wechselkopf 1 in axialer Richtung und verlaufen senkrecht zur axialen Richtung und in einem Abstand h parallel zueinander. Eine Schneide 16 weist eine Anschnittpartie 17 und eine Führungspartie 18 auf. Die Führungspartie ist vergleichsweise kurz, so dass auch der Abstand h vergleichsweise kurz ist. Trotz der sehr kurzen Führungspartie 18 ist in den meisten Anwendungsfällen ein zweckmässiger Einsatz des Maschinenreibwerkzeuges gemäss der Erfindung möglich.

Figur 5 zeigt eine bevorzugten Ausführungsform der Erfindung, in welcher mehrere durchgehende Bohrungen mit jeweils einer Aussparung für einen Schraubenkopf 14 konzentrisch um eine mittige Bohrung 13 angeordnet sind. Dadurch wird auch bei solchen ringförmigen Wechselköpfen 1 mit einem grösseren Durchmesser eine ausreichende Befestigung und Drehmomentübertragung gewährleistet. Da bei dieser Ausführungsform die Aussparungen für die Schraubenköpfe 14 und die Verbindungselemente wie Innenkonus 11 nebeneinander und nicht auf derselben Achse angeordnet sind, kann die maximale Dicke h1 sogar weniger als 3 mm oder 2 mm betragen.

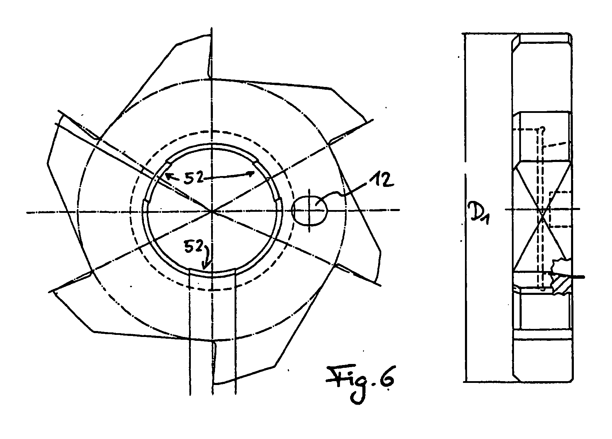

Figur 6 zeigt eine weitere bevorzugte Ausführungsform der Erfindung, in welcher der Innenkonus 11 drei Auflagesegmente 52 auf, welche freigestellt sind, das heisst die übrigen Bereiche des Innenkonus weisen einen leicht grösseren Innenradius auf. Die Auflagesegmente 52 sind in Umfangsrichtung voneinander beabstandet gleichmässig über den Umfang verteilt. Bei der Herstellung müssen nur die Flächen dieser Auflagesegmente 52 mit hoher Genauigkeit gefertigt respektive geschliffen werden.

**BEZUGSZEICHENLISTE**

1      Reibkopf, Wechselkopf

| 11 | Innenkonus |
| 12 | Orientierungsloch |
| 13 | Bohrung |
| 14 | Aussparung für Schraubenkopf |
| 15 | schaftseitige Planfläche |
| 16 | Schneide |
| 17 | Anschnittpartie |
| 18 | Führungspartie |
| 2 | Schaft |
| 21 | Aussenkonus |
| 22 | Orientierungsstift |
| 23 | Gewindebohrung |
| 24 | Kühlmittelkanal |
| 25 | stirnseitige Planfläche |
| 26 | Axialbohrung |
| 27 | Verbindungselement am Schaft |
| 3 | Kopfschraube |
| 50 | Aussparung |
| 52 | Auflagesegment |

**Patentansprüche**

1. Maschinenreibwerkzeug, aufweisend einen Schaft (2) und einen auswechselbaren, einstückigen Wechselkopf (1), wobei der Wechselkopf (1) in einer planen schaftseitigen Stirnfläche (15) eine als Verbindungselement ausgebildete Aussparung (50) zur zentrierenden Befestigung des Wechselkopfs (1) auf dem Schaft (2) aufweist, wobei der Schaft (2) an einer stirnseitigen Planfläche (25) einen in axialer Richtung aus dieser Planfläche (25) hervortretenden Verbindungsansatz (21) aufweist, welcher mit der Aussparung (50) des Wechselkopfs (1) korrespondiert, wobei am Wechselkopf (1) die als Verbindungselement ausgebildete Aussparung (50) einen achsenzentralen Innenkonus (11), zur Zentrierung des Wechselkopfes (1) auf dem Schaft (2) bildet, und wobei am Schaft (2) der Verbindungsansatz ein korrespondierender Aussenkonus (21) ist, **dadurch gekennzeichnet, dass** der Wechselkopf (1) in axialer Richtung an jeder Stelle, also inklusive von Mitteln zur Wechseladaption, dünner als eine maximale Dicke $h_{max}$ ist, wobei sich diese maximale Dicke $h_{max}$ in Millimetern aus einem Durchmesser D1 des Wechselkopfs in Millimetern berechnet als $h_{max} = 6mm + (1/10) \cdot (D1-12mm)$, und dass der auf dem Schaft (2) montierte Wechselkopf (1) den Verbindungsansatz (21) des Schafts (2) zumindest stellenweise komprimiert.

2. Maschinenreibwerkzeug gemäss Anspruch 1, **dadurch gekennzeichnet, dass** der Wechselkopf (1) keinen axial vorstehenden Ansatz zur Wechseladaption aufweist.

3. Maschinenreibwerkzeug gemäss Anspruch 1 oder 2, **dadurch gekennzeichnet, dass** eine Aussparung (14) an der Stirnfläche des Wechselkopfs (1), die dem Schaft (2) abgewandt ist, eine Aussparung (14) für einen Schraubenkopf einer Schraube (3) bildet, wodurch der Schraubenkopf im Wechselkopf (1) versenkbar ist.

4. Maschinenreibwerkzeug gemäss einem der Ansprüche 1 bis 3, **dadurch gekennzeichnet, dass** am Wechselkopf (1) der Innenkonus (11) mindestens drei freigestellte Auflagesegmente (52) aufweist.

5. Wechselkopf (1) für ein Maschinenreibwerkzeug, welcher Wechselkopf (1) einstückig ausgebildet ist und in einer planen schaftseitigen Stirnfläche (15) eine als Verbindungselement ausgebildete Aussparung (50) zur zentrierenden Befestigung des Wechselkopfs (1) auf einem Schaft (2) aufweist, wobei am Wechselkopf (1) die als Verbindungselement ausgebildete Aussparung (50) einen achsenzentralen Innenkonus (11) zur Zentrierung des Wechselkopfes (1) auf dem Schaft (2) bildet, und der Wechselkopf (1) keinen axial vorstehenden Ansatz zur Wechseladaption aufweist, **dadurch gekennzeichnet, dass** der Wechselkopf (1) in axialer Richtung an jeder Stelle, also inklusive von Mitteln zur Wechseladaption, dünner als eine maximale Dicke $h_{max}$ ist, wobei sich diese maximale Dicke $h_{max}$ in Millimetern aus einem Durchmesser D1 des Wechselkopfs in Millimetern berechnet als $h_{max} = 6 \, mm + (1/10) \cdot (D1-12 \, mm)$.

6. Wechselkopf (1) gemäss Anspruch 5, **dadurch gekennzeichnet, dass** eine Aussparung (14) an der Stirnfläche des Wechselkopfs (1), die dem Schaft abgewandt ist, eine Aussparung (14) für einen Schraubenkopf einer Schraube (3) zur Befestigung des Wechselkopfs (1) bildet, wodurch der Schraubenkopf im Wechselkopf (1) versenkbar ist.

7. Wechselkopf (1) gemäss Anspruch 6, **dadurch gekennzeichnet, dass** der Wechselkopf (1) in axialer Richtung eine Dicke von maximal 6 mm, vorzugsweise maximal 4 mm oder weniger aufweist.

8. Wechselkopf (1) gemäss einem der Ansprüche 5 bis 7, **dadurch gekennzeichnet, dass** er ein Mittel, insbesondere eine Aussparung (12), zur eindeutigen Orientierung des Wechselkopfes (1) in Umfangsrichtung aufweist.

9. Wechselkopf (1) gemäss einem der Ansprüche 5 bis 8, **dadurch gekennzeichnet, dass** er mehrere durchgehende Bohrungen, mit jeweils einer Ausnehmung (14) zur Aufnahme eines Schraubenkopfes auf der dem Innenkonus gegenüberliegenden Seite aufweist.

10. Schaft (2) für ein Maschinenreibwerkzeug, aufweisend einen im wesentlichen rotationssymmetrischen Schaft mit einer stirnseitigen Planfläche (25), wobei der Schaft (2) einen aus dieser Planfläche (25) hervortretenden Verbindungsansatz (21) zur Montage eines aufsetzbaren Wechselkopfs (1) aufweist, der Verbindungsansatz ein Aussenkonus (21) ist, **dadurch gekennzeichnet, dass** der Aussenkonus weniger als 4 mm über die stirnseitigen Planfläche (25) des Schaftes (2) hinausragt, und dass der Verbindungsansatz (21) des Schafts (2) durch einen auf dem Schaft (2) montierten Wechselkopf (1) zumindest stellenweise komprimierbar ist.

11. Schaft (2) gemäss Anspruch 10, **dadurch gekennzeichnet, dass** der Aussenkonus weniger als 2 mm über die stirnseitigen Planfläche (25) des Schaftes (2) hinausragt.

12. Schaft (2) gemäss Anspruch 10 oder 11, **dadurch gekennzeichnet, dass** der Schaft (2) mehrere um den Verbindungsansatz angeordnete Bohrungen zur Aufnahme von Schrauben zur Befestigung eines Wechselkopfes aufweist.

13. Schaft (2) gemäss einem der Ansprüche 10 bis 12, **dadurch gekennzeichnet, dass** er auf der stirnseitigen Planfläche (25) ein Mittel (22) zur eindeutigen Orientierung eines aufsetzbaren Wechselkopfes (1) in Umfangsrichtung aufweist.

**Claims**

1. A machine reaming tool, comprising a shaft (2) and an exchangeable, single-piece interchangeable head (1), wherein the interchangeable head (1) in a planar, shaft-side end-face (15) comprises a cutout (50) designed as a connection element, for the centring fastening of the interchangeable head (1) on the shaft (2), wherein the shaft (2) on an end-side plane surface (25) comprises a connection lug (21) projecting from this plane surface (25) in the axial direction, said lug corresponding to the cutout (50) of the interchangeable head (1), wherein on the interchangeable head (1), the cutout (50) formed as a connection element, forms an axially central conical socket (11) for centring the interchangeable head (1) on the shaft (2), and wherein the connection lug is a corresponding conical projection (21) on the shaft (2), **characterised in that** the interchangeable head (1) in the axial direction and at each location, thus including means for exchange adaptation, is thinner than a maximal thickness $h_{max}$, wherein this maximal thickness $h_{max}$ in millimetres is computed from a diameter D 1 of the interchangeable head in millimetres as $h_{max} = 6mm + (1/10) \cdot (D1-12mm)$, and that the interchangeable head (1) mounted on the shaft (2) at least in places compresses the connection lug (21) of the shaft (2).

2. A machine reaming tool according to claim 1, **characterized in that** the interchangeable head (1) comprises no axially projecting lug for exchange adaptation.

3. A machine reaming tool according to claim 1 or 2, **characterized in that** a recess (14) on the face of the interchangeable head (1) facing away from the shaft, forms a pocket (14) for a screw head of a screw (3), by which the screw head may be sunk in the interchangeable head (1).

4. A machine reaming tool according to one of claims 1 to 3, **characterized in that** the conical socket (11) on the interchangeable head (1) comprises at least three exposed contact segments (52).

5. An interchangeable head (1) for a machine reaming tool, said interchangeable head (1) being formed as one piece and in a planar shaft-side end-face (15) comprising a cutout (50) formed as a connection element for the centring fastening of the exchangeable head (1) on a shaft (2), wherein in the exchangeable head (1) the cutout (50) designed as a connection element forms an axially central conical socket (11) for centring the exchangeable head (1) on the shaft (2) and the exchangeable head (1) comprises no axially projecting lug for exchange adaptation, **characterised in that** the interchangeable head (1) in the axial direction and at each location, thus including the means for exchange adaptation, is thinner than a maximal thickness $h_{max}$, wherein this maximal thickness $h_{max}$ in millimetres is computed from a diameter D1 of the interchangeable head in millimetres as $h_{max}$ = 6mm + (1/10)·(D1-12mm).

6. An interchangeable head according to claim 5, **characterized in that** a recess (14) on the face of the interchangeable head (1) facing away from the shaft, forms a pocket (14) for a screw head of a screw (3) for fastening the interchangeable head (1), by which the screw head is sinkable in the interchangeable head (1).

7. An interchangeable head (1) according to claim 6, **characterized in that** the interchangeable head (1) in the axial direction has a thickness of maximally 6mm, preferably maximally 4mm or less.

8. An interchangeable head (1) according to one of the claims 5 to 7, **characterized in that** it comprises a means, in particular a recess (12) for unambiguous orientation of the interchangeable head in peripheral direction.

9. An interchangeable head (1) according to one of the claims 5 to 8, **characterized in that** it comprises several continuous bores, each with a recess (14) for accommodating a screw head on the side opposite the conical socket.

10. A shaft (2) for a machine reaming tool, comprising an essentially rotationally symmetrical shaft with an end-face plane surface (25), wherein the shaft (2) comprises a connection lug (21) projecting out of this plane surface (25), for assembly of an attachable interchangeable head (1), the connection lug is a conical projection (21), **characterized in that** the conical projection projects by less than 4mm beyond the end-face plane surface (25) of the shaft (2) and that the connection lug (21) of the shaft (2) is compressible at least in places by a interchangeable head (1) attached to the shaft (2).

11. A shaft (2) according to claim 10, **characterized in that** the conical projection projects by less than 2mm beyond the end-face plane surface (25) of the shaft (2).

12. A shaft (2) according to claim 10 or 11, **characterized in that** the shaft comprises, arranged around the connection lug, several bores for receiving screws for fastening of an interchangeable head.

13. A shaft (2) according to one of claims 10 to 12, **characterized in that** on the face-side plane surface (25) it comprises a means (22) for unambiguous orientation of an attachable interchangeable head (1) in peripheral direction.

**Revendications**

1. Alésoir machine comportant une queue (2) et une tête amovible (1) changeable d'une seule pièce, où la tête amovible (1) présente sur une surface frontale (15) plane côté queue un évidement (50) réalisé comme élément d'assemblage pour la fixation centrée de la tête amovible (1) sur la queue (2), où la queue (2) présente sur une surface frontale plane (25) un épaulement d'assemblage (21) dépassant de cette surface plane (25) en direction axiale et correspondant à l'évidement (50) de la tête amovible (1), où, sur la tête amovible (1), l'évidement (50) réalisé comme élément d'assemblage forme un cône femelle (11) axialement centré pour le centrage de la tête amovible (1) sur la queue (2), et où l'épaulement d'assemblage sur la queue (2) est un cône mâle (21) correspondant, **caractérisé en ce que** l'épaisseur de la tête amovible (1) est inférieure à une épaisseur maximale $h_{max}$ à n'importe quel endroit en direction axiale, moyens adaptateurs de changement inclus, ladite épaisseur maximale $h_{max}$ étant calculée en millimètres à partir d'un diamètre D1 de la tête amovible (1) comme $h_{max}$ = 6mm+(1/10)·(D1-12 mm), et **en ce que** la tête amovible (1) montée sur la queue (2) comprime au moins par endroits l'épaulement d'assemblage (21) de la queue (2).

2. Alésoir machine selon la revendication 1, **caractérisé en ce que** la tête amovible (1) ne présente aucun épaulement en saillie axiale pour l'adaptation de changement.

3. Alésoir machine selon la revendication 1 ou la revendication 2, **caractérisé en ce qu'**un évidement (14) sur la surface frontale de la tête amovible (1) opposée à la queue (2) forme un évidement (14) pour la tête d'une vis (3), ladite tête de vis pouvant être noyée dans la tête amovible (1).

**4.** Alésoir machine selon l'une des revendications 1 à 3, **caractérisé en ce que** le cône femelle (11) sur la tête amovible (1) présente au moins trois segments d'appui dégagés (52).

**5.** Tête amovible (1) pour un alésoir machine, ladite tête amovible (1) étant réalisée d'une seule pièce et présentant sur une surface frontale (15) plane côté queue un évidement (50) réalisé comme élément d'assemblage pour la fixation centrée de la tête amovible (1) sur la queue (2), où, sur la tête amovible (1), l'évidement (50) réalisé comme élément d'assemblage forme un cône femelle (11) axialement centré pour le centrage de la tête amovible (1) sur la queue (2), et où la tête amovible (1) ne présente aucun épaulement en saillie axiale pour l'adaptation de changement, **caractérisée en ce que** l'épaisseur de la tête amovible (1) est inférieure à une épaisseur maximale $h_{max}$ à n'importe quel endroit en direction axiale, moyens adaptateurs de changement inclus, ladite épaisseur maximale $h_{max}$ étant calculée en millimètres à partir d'un diamètre D1 de la tête amovible comme $h_{max} = 6mm+(1/10)\cdot(D1-12\ mm)$.

**6.** Tête amovible (1) selon la revendication 5, **caractérisée en ce qu'**un évidement (14) sur la surface frontale de la tête amovible (1) opposée à la queue (2) forme un évidement (14) pour la tête d'une vis (3) pour la fixation de la tête amovible (1), ladite tête de vis pouvant être noyée dans la tête amovible (1).

**7.** Tête amovible (1) selon la revendication 6, **caractérisée en ce que** ladite tête amovible (1) présente une épaisseur maximale de 6 mm en direction axiale, de préférence une épaisseur maximale de 4 mm voire moins.

**8.** Tête amovible (1) selon l'une des revendications 5 à 7, **caractérisée en ce que** celle-ci comprend un moyen, en particulier un évidement (12) pour l'orientation définie de la tête amovible (1) en direction périphérique.

**9.** Tête amovible (1) selon l'une des revendications 5 à 8, **caractérisée en ce que** celle-ci comporte plusieurs trous débouchants, chacun avec un évidement (14) pour le logement d'une tête de vis sur le côté faisant face au cône femelle.

**10.** Queue (2) pour un alésoir machine, comportant une queue sensiblement rotationnellement symétrique avec une surface frontale plane (25), où la queue (2) présente un épaulement d'assemblage (21) dépassant de cette surface plane (25) pour le montage d'une tête amovible (1) changeable, où l'épaulement d'assemblage est un cône mâle (21), **caractérisée en ce que** le cône mâle dépasse de moins de 4 mm la surface frontale plane (25) de la queue (2), et **en ce que** l'épaulement d'assemblage (21) de la queue (2) peut être comprimé au moins par endroits par une tête amovible (1) montée sur la queue (2).

**11.** Queue (2) selon la revendication 10, **caractérisée en ce que** le cône mâle dépasse de moins de 2 mm la surface frontale plane (25) de la queue (2).

**12.** Queue (2) selon la revendication 10 ou la revendication 11, **caractérisée en ce que** ladite queue (2) présente plusieurs trous disposés autour de l'épaulement d'assemblage pour le logement de vis pour la fixation d'une tête amovible.

**13.** Queue (2) selon l'une des revendications 10 à 12, **caractérisée en ce que** celle-ci comprend sur sa surface frontale plane (25) un moyen (22) pour l'orientation définie d'une tête amovible (1) rapportée en direction périphérique.

Fig. 1

Fig. 2

Fig. 3

Fig. 4

Fig. 5

Fig.6

**EP 1 529 587 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0164381 A2
- US 1472798 A
- US 2164573 A
- CH 433916
- JP 7040141 A
- DE 19600239 C1
- JP 2002059314 A

**In der Beschreibung aufgeführte Nicht-Patentliteratur**

- *PATENT ABSTRACTS OF JAPAN,* 30. Juni 1995, vol. 1995, 05